# FASCICULE DE BREVET EUROPEEN

(11) **EP 1 279 927 B1**
(45) Date de publication et mention de la délivrance du brevet: **27.02.2019**
(21) Numéro de dépôt: 02291638.1
(22) Date de dépôt: 01.07.2002
(51) Int. Cl.: G01D 5/12, G01L 1/18, G01L 9/00, H01L 21/033

(54) **Procédés de fabrication d'un dispositif piézorésistif**
Herstellungsverfahren für Piezowiderstandseinrichtung
Method of fabricating a piezoresistive device

(30) Priorité: 03.07.2001 FR 0108812
(43) Date de publication de la demande: 29.01.2003
(73) Titulaire: Commissariat à l'Énergie Atomique et aux Énergies Alternatives, 75015 Paris (FR)
(72) Inventeur: Danel, Jean-Sébastien, 38130 Echirolles (FR)
(74) Mandataire: Audier, Philippe André

(56) Documents cités:
- EP-A1- 0 436 192
- WO-A-87/04300
- GB-A- 2 207 804
- GB-A- 2 348 958
- JP-A- S58 222 527
- US-A- 5 172 205
- KOZIN S A ET AL: "THE DESIGN AND MANUFACTURING OF THE SENSITIVE ELEMENTS OF INTEGRATED TRANSDUCERS OF MACHANICAL QUANTITIES", TELECOMMUNICATIONS AND RADIO ENGINEERING, BEGELL HOUSE, INC., NEW YORK, NY, US, vol. 49, no. 12, 1 décembre 1995 (1995-12-01), pages 79-82, XP000592724, ISSN: 0040-2508

## Description

### Domaine technique

La présente invention concerne un dispositif piézorêsistif, ce dispositif comprenant au moins une jauge piézorésistive, ainsi que des procédés de fabrication de ce dispositif.

L'invention s'applique notamment à la mesure de pressions ou d'accélérations.

### Etat de la technique antérieure

On rappelle que les jauges piézorésistives sont utilisées en tant que moyens de mesure sur un grand nombre de capteurs mécaniques, par exemple des capteurs de pression ou des capteurs d'accélération. Il s'agit en fait de résistances électriques dont la valeur est modifiée sous l'effet de contraintes extérieures.

Au sujet de telles jauges, on se reportera par exemple au document suivant :
US-A-5,973,590, "Ultrathin surface mount wafer sensor structures and method of fabricating same".

Pour former des jauges piézorésistives, il est connu de former d'abord, dans un substrat en silicium, un caisson ayant un type de dopage opposé à celui du substrat, puis de définir des jauges piézorésistives dans ce caisson par une implantation de même type que celui du substrat.

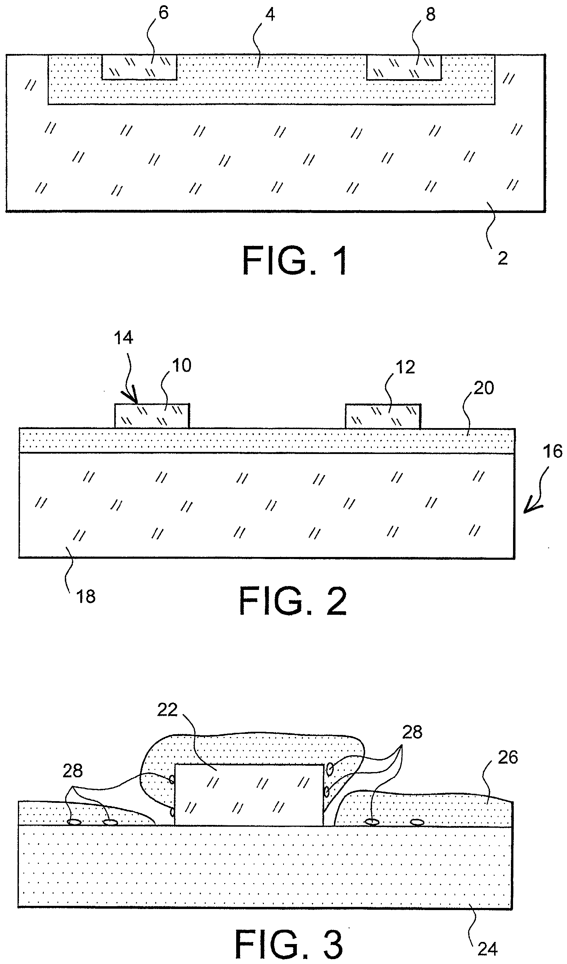

A titre d'exemple, on voit sur la figure 1 un substrat 2 en silicium monocristallin de type P, un caisson 4 de type N++ dans ce substrat et deux jauges piézorésistives 6 et 8 en silicium monocristallin de type P+, qui sont formées dans ce caisson. Les jauges sont donc isolées l'une de l'autre par une jonction P-N.

Le système de jauges de la figure 1 présente un inconvénient : il existe un courant de fuite entre les jauges piézorésistives 6 et 8 et ce courant augmente exponentiellement avec la température, de sorte que la température de fonctionnement de ce système ne peut dépasser une valeur de l'ordre de 125°C.

Il est également connu de former des jauges piézorésistives sur une couche de SiO₂, elle-même formée sur un substrat, en déposant une couche de polysilicium sur cette couche de SiO₂ et en gravant ensuite cette couche de polysilicium jusqu'à la couche de SiO₂ pour former les jauges.

L'effet piézorésistif est alors moindre que si l'on utilisait une couche de silicium monocristallin. De plus, le polysilicium a de moins bonnes propriétés intrinsèques que le silicium monocristallin car il présente notamment des contraintes résiduelles et des caractéristiques mécaniques inférieures.

On connaît en outre des jauges piézorésistives qui sont formées sur un substrat SOI.

Cette technique connue est schématiquement illustrée par la figure 2 où l'on voit des jauges piézorésistives 10 et 12 que l'on a gravées dans la couche 14 en silicium monocristallin d'un substrat SOI 16 comprenant un substrat primaire 18, une couche 20 en SiO₂ formée sur ce dernier et la couche 14 formée sur cette couche 20.

On bénéficie ainsi de toutes les propriétés d'un matériau monocristallin et l'effet piézorésistif est maximum.

Il est aussi connu de coller des jauges piézorésistives du genre de celles de la figure 2 sur la couche superficielle en SiO₂ d'un substrat de base. A ce sujet, on consultera le document suivant :
US-A-5,877,425, "Semiconductor-type pressure sensor with sensing based upon pressure to a silicon plate".

On sait en outre que des jauges piézorésistives du genre de celles de la figure 2 peuvent être recouvertes d'une couche électriquement isolante, appelée couche de passivation. Dans cette dernière, on forme des trous de contact qui débouchent sur les jauges et l'on dépose des conducteurs sur cette couche de passivation et dans les trous de contact.

Cependant, il est rare que le dépôt de la couche de passivation soit parfaitement conforme et l'on trouve souvent des vides (en anglais "voids") le long des flancs des jauges. Ces vides sont susceptibles de nuire à la résistance des jauges au vieillissement.

Les jauges piézorésistives du genre de celles de la figure 2 sont formées par un procédé classique de gravure sèche (en anglais "dry etching"). Il en résulte un inconvénient.

En effet, les flancs des jauges ainsi obtenues sont abrupts car ces flancs forment des angles proches de 90° avec la couche sur laquelle les jauges sont formées, d'où un risque de mauvais recouvrement de ces jauges par la couche de passivation ultérieurement formée.

Ceci est schématiquement illustré par la figure 3 où l'on voit une jauge piézorésistive 22, formée sur une couche 24 de SiO₂, ainsi que la couche de passivation 26 qui recouvre mal la jauge 22. Cette couche de passivation est en effet interrompue à certains endroits.

Un autre inconvénient résulte de l'existence, sur les flancs des jauges, telles que la jauge 22, de résidus de gravure 28 qui sont susceptibles d'empêcher la bonne adhérence de la couche de passivation sur les flancs des jauges.

Le document JP07058346 décrit un procédé selon l'état de la technique.

### Exposé de l'invention

La présente invention a pour but de proposer un dispositif piézorésistif, ce dispositif comprenant au moins une jauge piézorésistive, cette jauge ayant une meilleure résistance mécanique que les jauges connues, mentionnées plus haut.

L'invention a également pour but de proposer des procédés de fabrication de ce dispositif, qui ne présentent pas les inconvénients mentionnés plus haut.

De façon précise, la présente invention a pour objet un dispositif piézorésistif, ce dispositif comprenant au moins une jauge piézorésistive et une couche électriquement isolante sur laquelle est formée la jauge piézorésistive, ce dispositif étant caractérisé en ce que les tangentes aux flancs de cette jauge piézorésistive, lorsque le dispositif est vu en coupe, font essentiellement des angles supérieurs à 90° avec la surface de la couche électriquement isolante sur laquelle la jauge piézorésistive est formée.

Le matériau dont est faite cette jauge peut être choisi parmi le silicium monocristallin, le silicium polycristallin et le carbure de silicium.

La présente invention concerne aussi un procédé de fabrication d'un dispositif piézorésistif, ce dispositif comprenant au moins une jauge piézorésistive et une couche électriquement isolante sur laquelle est formée la jauge piézorésistive, ce procédé étant caractérisé en ce que l'on forme une couche d'un matériau pour jauge piézorésistive sur la couche électriquement isolante, on forme un masque de protection sur la couche du matériau pour jauge piézorésistive, on effectue, dans les zones qui ne sont pas protégées par le masque, une gravure du matériau ou une transformation de celui-ci en un matériau électriquement isolant, telle que, après avoir retiré le masque de façon sélective, les tangentes aux flancs de la jauge piézorésistive ainsi formée, lorsque la dispositif est vu en coupe, font essentiellement des angles supérieurs à 90° avec la surface de la couche électriquement isolante sur laquelle la jauge piézorésistive est formée.

Selon un premier mode de mise en oeuvre particulier du procédé objet de l'invention, pour fabriquer le dispositif :
- on forme une couche d'un matériau pour jauge piézorésistive sur la couche électriquement isolante,
- on forme un masque de gravure sur cette couche du matériau, ce masque étant destiné à empêcher la gravure du matériau qu'il recouvre,
- on effectue une gravure humide isotrope des zones du matériau qui ne sont pas protégées par le masque, et
- on retire ce masque de façon sélective.

Selon un deuxième mode de mise en oeuvre particulier, pour fabriquer le dispositif :
- on forme une couche d'un matériau pour jauge piézorésistive sur la couche électriquement isolante,
- on forme un masque de gravure sur cette couche du matériau, ce masque étant destiné à empêcher la gravure du matériau qu'il recouvre,
- on effectue une gravure isotrope par plasma des zones du matériau qui ne sont pas protégées par le masque, et
- on retire ce masque de façon sélective.

Selon un troisième mode de mise en oeuvre particulier, pour fabriquer le dispositif :
- on forme une couche d'un matériau pour jauge piézorésistive sur la couche électriquement isolante,
- on forme un masque de gravure sur cette couche du matériau, ce masque étant destiné à empêcher la gravure du matériau qu'il recouvre,
- on effectue une gravure chimique anisotrope des zones du matériau qui ne sont pas protégées par le masque et
- on retire ce masque de façon sélective.

Selon un quatrième mode de mise en oeuvre particulier, pour fabriquer le dispositif :
- on forme une couche d'un matériau pour jauge piézorésistive sur la couche électriquement isolante, ce matériau étant capable d'être transformé en un matériau électriquement isolant,
- on forme un masque sur cette couche du matériau, ce masque étant destiné à empêcher la transformation du matériau qu'il recouvre en un deuxième matériau électriquement isolant,
- on transforme en ce deuxième matériau électriquement isolant le matériau pour jauge piézorésistive dans les zones de ce dernier matériau qui ne sont pas protégées par le masque, et
- on retire ce masque de façon sélective.

Le deuxième matériau électriquement isolant peut être le même que celui de la couche électriquement isolante.

Le masque utilisé dans ces procédés peut être en nitrure de silicium.

On peut en outre former une couche électriquement isolante de passivation sur la jauge piézorésistive.

La couche électriquement isolante de passivation peut être réalisée par transformation du matériau de la jauge pièzorésistive.

On peut aussi former une ouverture de contact à travers la couche de passivation, au niveau de la jauge piézorésistive, former une couche électriquement conductrice sur la couche de passivation et dans l'ouverture de contact et graver cette couche électriquement conductrice pour délimiter cette dernière.

Selon un mode de réalisation particulier de l'invention :
- on forme en outre une couche électriquement isolante sur la couche électriquement conductrice pour protéger cette dernière, et
- on forme une ouverture à travers cette couche électriquement isolante en vue de former un contact avec la couche électriquement conductrice.

### Brève description des dessins

La présente invention sera mieux comprise à la lecture de la description d'exemples de réalisation donnés ci-après, à titre purement indicatif et nullement limitatif, en faisant référence aux dessins annexés sur lesquels :
- les figures 1 à 3 sont des vues en coupe schématiques de jauges piézorésistives connues et ont déjà été décrites,
- les figures 4 à 6 sont des vues en coupe schématiques de dispositifs piézorésistifs conformes à l'invention, en cours de fabrication par un procédé de gravure humide isotrope (figure 4), un procédé de gravure chimique anisotrope (figure 5), et un procédé de croissance d'isolant (figure 6), conformément à l'invention, et
- la figure 7 est une vue en coupe schématique d'un dispositif piézorésistif conforme à l'invention, comprenant une couche de passivation électriquement isolante.

### Exposé détaillé de modes de réalisation particuliers

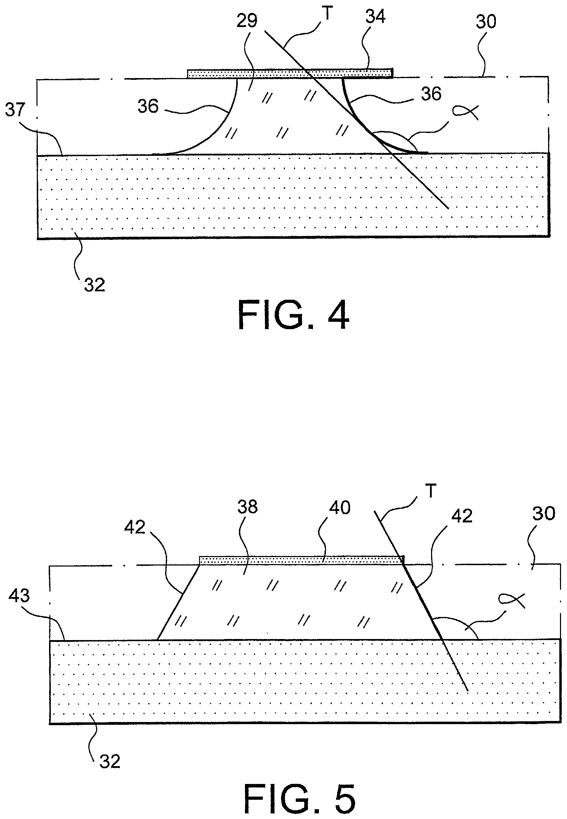

La figure 4 est une vue en coupe schématique d'un dispositif piézorésistif conforme à l'invention qui est en cours de fabrication par un procédé de gravure humide isotrope.

Ce dispositif comprend une jauge piézorésistive 29. Il est fabriqué à partir d'une structure comprenant une couche de silicium monocristallin 30 qui est formée sur une couche de silice 32, elle-même formée sur un substrat en silicium (non représenté).

On commence par déposer et structurer un masque de gravure 34, par exemple en nitrure de silicium, sur la couche de silicium 30. On effectue ensuite une gravure isotrope de cette couche de silicium 30 jusqu'à la couche de silice 32.

On utilise pour ce faire une gravure humide isotrope au moyen d'acide fluorhydrique ou d'acide nitrique.

Au lieu d'une gravure humide isotrope, on peut utiliser une gravure isotrope par plasma.

On effectue ensuite un retrait sélectif du masque 34, par exemple au moyen d'acide phosphorique chaud.

Les flancs 36 de la jauge piézorésistive 29 sont en pente douce : quasiment toutes les tangentes T à ces flancs font des angles α supérieurs à 90° avec la surface 37 de la couche de silice 32, sauf au voisinage du sommet de la jauge piézorésistive 29, là où se trouvait le masque 34.

On notera en particulier les angles obtus aux endroits où ces flancs se raccordent à la surface 37 (ceci étant également le cas pour les jauges piézorésistives des figures 5 à 7).

La technique que l'on vient de décrire en faisant référence à la figure 4 est simple.

Le fait d'avoir des flancs en pente douce diminue le risque d'aboutir à un recouvrement discontinu lors d'un dépôt ultérieur sur la jauge piézorésistive 29.

De plus, il n'y a pas de résidus de gravure sur les flancs 36 de cette jauge 29.

La figure 5 est une vue en coupe schématique d'un autre dispositif piézorésistif conforme à l'invention qui est en cours de fabrication par un procédé de gravure chimique anisotrope.

Ce dispositif comprend une jauge piézorésistive 38.

Il est encore fabriqué à partir de la structure mentionnée dans la description de la figure 4, comprenant la couche de silicium 30 sur la couche de silice 32, elle-même formée sur un substrat (non représenté).

On commence par déposer et structurer un masque de gravure 40, par exemple en nitrure de silicium, sur la couche de silicium 30. On effectue ensuite une gravure chimique anisotrope de la couche de silicium 30 jusqu'à la couche de silice 32.

Pour ce faire, on utilise par exemple de la potasse ou du TMAH (abréviation de tétra-méthyle-ammonium hydroxyde) ou tout autre produit de gravure apte à graver de façon anisotrope le silicium monocristallin.

On effectue ensuite un retrait sélectif du masque 40, par exemple au moyen d'acide phosphorique chaud.

La technique que l'on vient de décrire en faisant référence à la figure 5 est simple.

Les flancs 42 de la jauge piézorésistive 38 sont encore peu abrupts : les tangentes T à ces flancs 42 font des angles α supérieurs à 90° avec la surface 43 de la couche de silice 32.

Il n'y a pas non plus de résidus de gravure sur ces flancs 42.

De plus, dans le cas de la figure 5, les flancs de la jauge piézorésistive sont limités par des plans cristallins, d'où une très faible rugosité de surface.

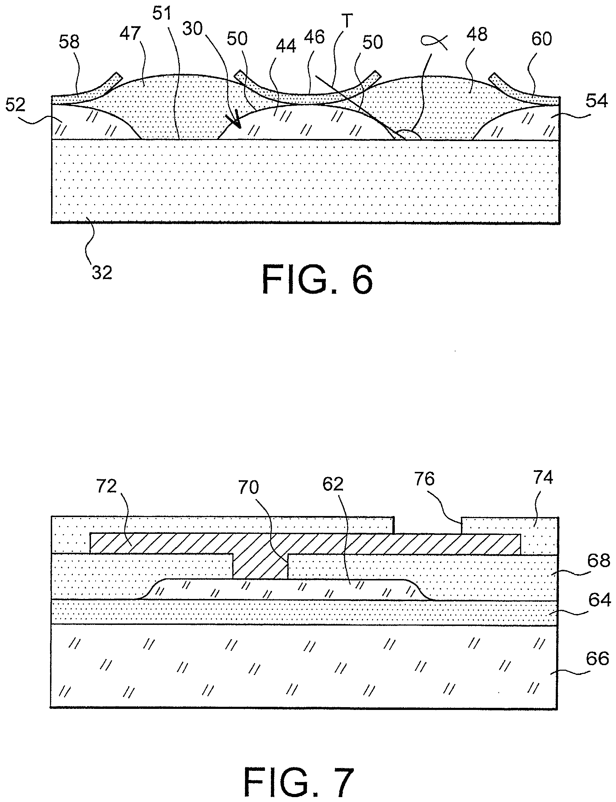

La figure 6 est une vue en coupe schématique d'un autre dispositif piézorésistif conforme à l'invention qui est en cours de fabrication par un procédé de croissance d'isolant.

Il est encore fabriqué à partir de la structure mentionnée dans la description de la figure 4, comprenant la couche de silicium 30 sur la couche de silice 32, elle-même formée sur un substrat en silicium (non représenté).

Ce dispositif comprend une jauge piézorésistive 44. Les parties d'autres jauges piézorésistives que l'on voit sur la figure 6 correspondent à une variante du dispositif, qui sera décrite ultérieurement.

On commence par déposer et structurer un masque de gravure 46, par exemple en nitrure de silicium, sur la couche de silicium 30. On fait alors croître de la silice dans les zones 47 et 48 de cette couche 30, qui ne sont pas protégées par le masque 46, par oxydation du silicium jusqu'à la couche de silice 32.

On effectue ensuite un retrait sélectif du masque 46, par exemple au moyen d'acide phosphorique chaud.

Les flancs 50 de la jauge piézorésistive 44 sont encore en pente douce : les tangentes T à ces flancs font des angles α supérieurs à 90° avec la surface 51 de la couche de silice 32.

La transition, ou interface, entre le matériau actif, c'est-à-dire le silicium de la jauge piézorésistive 44, et le matériau isolant, c'est-à-dire la silice des zones 47 et 48, est parfaite : elle ne présente aucune discontinuité.

De plus, la couverture des flancs 50 de la jauge 44 ne pose pas de problème car la silice des zones 47 et 48 est formée à partir du silicium existant.

Les dispositifs conformes à l'invention, que l'on a décrit en faisant référence aux figures 4 à 6, ne comprennent qu'une jauge piézorésistive mais pourraient comprendre une pluralité de telles jauges, espacées les unes des autres sur la couche de silice 32.

Ceci est schématiquement illustré sur la figure 6 où l'on voit des parties 52 et 54 d'autres jauges piézorésistives en silicium qui sont formées sur la couche de silice 32, de part et d'autre de la jauge piézorésistive 44, et sont séparées de cette jauge 44 par les zones de silice 47 et 48.

Le masque 46 est bien entendu adapté à la fabrication de l'ensemble des jauges. On voit aussi sur la figure 6 des parties 58 et 60 du masque 46 qui correspondent aux parties 52 et 54 des autres jauges, en cours de fabrication.

Dans la présente invention, au lieu du silicium monocristallin, on peut utiliser tout autre matériau qui permet la formation de jauges piézorésistives, par exemple le silicium polycristallin ou le carbure de silicium, et que l'on est capable de graver par gravure humide isotrope ou par gravure isotrope par plasma ou à partir duquel on est capable de former un matériau électriquement isolant par exemple au moyen d'une réaction chimique, ce matériau électriquement isolant étant par exemple un nitrure, un oxyde ou tout autre composé électriquement isolant.

La figure 7 est une vue en coupe schématique d'une jauge piézorésistive 62 conforme à l'invention.

Cette jauge piézorésistive 62, dont les flancs sont en pente douce, est formée par un procédé conforme à l'invention sur une couche en silice 64 elle-même formée sur un substrat en silicium 66.

Une fois cette jauge 62 fabriquée, on peut former sur elle une couche isolante passivante 68 par exemple en silice. On obtient ainsi ce que l'on peut appeler une jauge piézorésistive enterrée.

Cette couche passivante peut être réalisée soit par dépôt de matériau isolant (par exemple silice ou nitrure) soit par transformation (par exemple par oxydation) d'une couche superficielle du matériau de la jauge en un matériau isolant.

On peut ensuite former, à travers cette couche 68 et au niveau de la jauge piézorésistive 62, une ouverture 70 permettant de former un contact électrique avec cette jauge.

On dépose ensuite, à la surface de la couche passivante 68 et dans cette ouverture 70, une couche électriquement conductrice 72 par exemple en aluminium, qui est ainsi en contact avec le silicium de la jauge. Dans une variante non représentée, cette couche électriquement conductrice est un empilement d'une couche de titane (pour avoir un contact avec le silicium), d'une couche de nitrure de titane (pour former une barrière de diffusion) et d'une couche d'or (pour disposer d'un conducteur de faible résistivité).

On grave ensuite la couche électriquement conductrice 72 pour la délimiter.

Si besoin est, on peut ensuite former une couche électriquement isolante 74, par exemple en silice, sur la couche conductrice ainsi délimitée, afin de protéger cette dernière, puis former une ouverture 76 à travers cette couche 74 et au-dessus de la couche conductrice 72, pour pouvoir former un contact (non représenté) avec cette dernière, par exemple au moyen de la technique de liaison par fil (en anglais "wire bonding").

A titre purement indicatif et nullement limitatif, une jauge piézorésistive conforme à l'invention a une hauteur de l'ordre de 0,2 *µ*m à quelques micromètres, une longueur (comptée parallèlement au plan des figures 4 à 7) de l'ordre de 50 *µ*m à 250 *µ*m et une profondeur (comptée perpendiculairement au plan des figures) de l'ordre de quelques micromètres.

L'invention a divers avantages, en particulier :
- une meilleure résistance mécanique des jauges piézorésistives du fait que leurs flancs sont en pente douce, et
- une fiabilité considérablement améliorée du dispositif piézorésistif dans le cas où les jauges sont enterrées, ou encapsulées, dans un matériau électriquement isolant, du fait que cette encapsulation est complète, sans discontinuités aux interfaces.

En outre, le procédé de fabrication, dont un exemple a été donné en faisant référence à la figure 6, conduit à une grande fiabilité du fait qu'il n'utilise pas de gravure et qu'il n'y a donc pas de risque de redépôt de matière sur les parois.

De plus, ce procédé de fabrication conduit à une parfaite continuité entre la couche d'isolant électrique (silice dans l'exemple de la figure 6) et les jauges, d'où une meilleure résistance thermique et un risque réduit de fissuration.

## Revendications

1. Procédé de fabrication d'un dispositif piézorésistif, ce dispositif comprenant au moins une jauge piézorésistive (29, 38, 44, 62) et une couche électriquement isolante (32, 64) sur laquelle est formée la jauge piézorésistive, ce procédé étant **caractérisé en ce que** l'on forme une couche (30) d'un matériau pour jauge piézorésistive sur la couche électriquement isolante (32), on forme un masque de protection (34, 40, 46) sur la couche de matériau pour jauge piézorésistive, on effectue, dans les zones qui ne sont pas protégées par le masque, une gravure du matériau ou une transformation de celui-ci en un matériau électriquement isolant, telle que, après avoir retiré le masque de façon sélective, les tangentes (T) aux flancs de la jauge piézorésistive ainsi formée, lorsque le dispositif est vu en coupe, font essentiellement des angles (α) supérieurs à 90° avec la surface de la couche électriquement isolante sur laquelle la jauge piézorésistive est formée.

2. Procédé selon la revendication 1, dans lequel le matériau pour jauge piézorésisive est choisi parmi le silicium monocristallin, le silicium polycristallin et le carbure de silicium.

3. Procédé selon l'une quelconque des revendications 1 et 2, dans lequel :
- on forme une couche (30) d'un matériau pour jauge piézorésistive sur la couche électriquement isolante (32),
- on forme un masque de gravure (34) sur cette couche du matériau, ce masque étant destiné à empêcher la gravure du matériau qu'il recouvre,
- on effectue une gravure humide isotrope des zones du matériau qui ne sont pas protégées par le masque, et
- on retire ce masque de façon sélective.

4. Procédé selon l'une quelconque des revendications 1 et 2, dans lequel :
- on forme une couche (30) d'un matériau pour jauge piézorésistive sur la couche électriquement isolante (32),
- on forme un masque de gravure (34) sur cette couche du matériau, ce masque étant destiné à empêcher la gravure du matériau qu'il recouvre,
- on effectue une gravure isotrope par plasma des zones du matériau qui ne sont pas protégées par le masque, et
- on retire ce masque de façon sélective.

5. Procédé selon l'une quelconque des revendications 1 et 2, dans lequel :
- on forme une couche (30) d'un matériau pour jauge piézorésistive sur la couche électriquement isolante (32),
- on forme un masque de gravure (40) sur cette couche du matériau, ce masque étant destiné à empêcher la gravure du matériau qu'il recouvre,
- on effectue une gravure chimique anisotrope des zones du matériau qui ne sont pas protégées par le masque, et
- on retire ce masque de façon sélective.

6. Procédé selon l'une quelconque des revendications 1 et 2, dans lequel :
- on forme une couche (30) d'un matériau pour jauge piézorésistive sur la couche électriquement isolante (32),
- on forme un masque (46) sur cette couche du matériau, ce masque étant destiné à empêcher la transformation du matériau qu'il recouvre en un deuxième matériau électriquement isolant,
- on transforme en ce deuxième matériau électriquement isolant le matériau pour jauge piézorésistive dans les zones (47, 48) de ce dernier matériau qui ne sont pas protégées par le masque, et
- on retire ce masque de façon sélective.

7. Procédé selon la revendication 6, dans lequel le deuxième matériau électriquement isolant est le même que celui de la couche électriquement isolante (32).

8. Procédé selon l'une quelconque des revendications 3 à 7, dans lequel le masque (34, 40, 46) est en nitrure de silicium.

9. Procédé selon l'une quelconque des revendications 3 à 8, dans lequel on forme en outre une couche électriquement isolante de passivation (68) sur la jauge piézorésistive (62).

10. Procédé selon la revendication 9, dans lequel la couche électriquement isolante de passivation (68) est réalisée par transformation du matériau de la jauge piézorésistive.

11. Procédé selon d'une quelconque des revendications 9 et 10, dans lequel :
- on forme une ouverture de contact (70) à travers la couche de passivation (68), au niveau de la jauge piézorésistive (62),
- on forme une couche électriquement conductrice (72) sur la couche de passivation (68) et dans l'ouverture de contact (70), et
- on grave cette couche électriquement conductrice pour délimiter cette dernière.

12. Procédé selon la revendication 11, dans lequel :
- on forme en outre une couche électriquement isolante (74) sur la couche électriquement conductrice (72) pour protéger cette dernière, et
- on forme une ouverture (76) à travers cette couche électriquement isolante en vue de former un contact avec la couche électriquement conductrice.

## Patentansprüche

1. Verfahren zur Herstellung einer piezoresistiven Vorrichtung, wobei diese Vorrichtung wenigstens ein piezoresistives Messelement (29, 38, 44, 62) sowie eine elektrisch isolierende Schicht (32, 64) umfasst, auf der das piezoresistive Messelement gebildet ist, wobei dieses Verfahren **dadurch gekennzeichnet ist, dass** man eine Schicht (30) aus einem Material für das piezoresistive Messelement auf der elektrisch isolierenden Schicht (32) bildet, dass man eine Schutzmaske (34, 40, 46) auf der Schicht aus Material für das piezoresisitve Messelement bildet, und dass man in den Zonen, die nicht durch die Maske geschützt sind, ein Ätzen des Materials oder eine Transformation desselben in ein elektrisch isolierendes Material derart durchführt, dass nach dem Entfernen der Maske auf selektive Weise die Tangenten (T) an die Flanken des derart gebildeten piezoresistiven Messelements dann, wenn die Vorrichtung im Schnitt betrachtet wird, im Wesentlichen Winkel (*α*) größer als 90° mit der Oberfläche der elektrisch isolierenden Schicht bilden, auf der das piezoresistive Messelement gebildet ist.

2. Verfahren nach Anspruch 1, bei dem das Material für das piezoresistive Messelement ausgewählt ist aus monokristallinem Silizium, polykristallinem Silizium und Siliziumkarbid.

3. Verfahren nach einem der Ansprüche 1 und 2, bei dem:
- man eine Schicht (30) aus einem Material für das piezoresistive Messelement auf der elektrisch isolierenden Schicht (32) bildet,
- man eine Ätzmaske (34) auf dieser Schicht aus Material bildet, wobei diese Maske dazu ausgelegt ist, das Ätzen des Materials zu verhindern, das sie bedeckt,
- man ein isotropes Nassätzen der Zonen des Materials durchführt, die nicht durch die Maske geschützt sind, und
- man diese Maske auf selektive Weise entfernt.

4. Verfahren nach einem der Ansprüche 1 und 2, bei dem:
- man eine Schicht (30) aus einem Material für das piezoresistive Messelement auf der elektrisch isolierenden Schicht (32) bildet,
- man eine Ätzmaske (34) auf dieser Schicht aus Material bildet, wobei diese Maske dazu ausgelegt ist, das Ätzen des Materials zu verhindern, das sie bedeckt,
- man ein isotropes Plasmaätzen der Zonen des Materials durchführt, die nicht durch die Maske geschützt sind, und
- man diese Maske auf selektive Weise entfernt.

5. Verfahren nach einem der Ansprüche 1 und 2, bei dem:
- man eine Schicht (30) aus einem Material für das piezoresistive Messelement auf der elektrisch isolierenden Schicht (32) bildet,
- man eine Ätzmaske (40) auf dieser Schicht aus Material bildet, wobei diese Maske dazu ausgelegt ist, das Ätzen des Materials zu verhindern, das sie bedeckt,
- man ein anisotropes chemisches Ätzen der Zonen des Materials durchführt, die nicht durch die Maske geschützt sind, und
- man diese Maske auf selektive Weise entfernt.

6. Verfahren nach einem der Ansprüche 1 und 2, bei dem:
- man eine Schicht (30) aus einem Material für das piezoresistive Messelement auf der elektrisch isolierenden Schicht (32) bildet,
- man eine Maske (46) auf dieser Schicht aus Material bildet, wobei diese Maske dazu ausgelegt ist, die Transformation des Materials, das sie bedeckt, in ein zweites elektrisch isolierendes Material zu verhindern,
- man das Material für das piezoresistive Messelement in den Zonen (47, 48) dieses letztgenannten Materials, die nicht durch die Maske geschützt sind, in dieses zweite elektrisch isolierende Material transformiert, und
- man diese Maske auf selektive Weise entfernt.

7. Verfahren nach Anspruch 6, bei dem das zweite elektrisch isolierende Material das gleiche ist wie jenes der elektrisch isolierenden Schicht (32).

8. Verfahren nach einem der Ansprüche 3 bis 7, bei dem die Maske (34, 40, 46) aus Siliziumnitrid ist.

9. Verfahren nach einen der Ansprüche 3 bis 8, bei dem man ferner eine elektrisch isolierende Passivierungsschicht (68) auf dem piezoresistiven Messelement (62) bildet.

10. Verfahren nach Anspruch 9, bei dem die elektrisch isolierende Passivierungsschicht (68) durch Transformation des Materials des piezoresistiven Messelements realisiert wird.

11. Verfahren nach einem der Ansprüche 9 und 10, bei dem:
- man eine Kontaktöffnung (70) durch die Passivierungsschicht (68) hindurch im Bereich des piezoresistiven Messelements (62) bildet,
- man eine elektrische leitende Schicht (72) auf der Passivierungsschicht (68) und in der Kontaktöffnung (70) bildet, und
- man diese elektrisch leitende Schicht ätzt, um diese letztgenannte zu begrenzen.

12. Verfahren nach Anspruch 11, bei dem:
- man ferner eine elektrisch isolierende Schicht (74) auf der elektrisch leitenden Schicht (72) bildet, um diese letztgenannte zu schützen, und
- man eine Öffnung (76) durch diese elektrisch isolierende Schicht hindurch bildet, um einen Kontakt mit der elektrisch leitenden Schicht herzustellen.

## Claims

1. Manufacturing process of a piezoresistive device, where this device comprises at least one piezoresistive gauge (29, 38, 44, 62) and an electric isolation layer (32, 64) upon which the piezoresistive gauge is formed, where this process is **characterised in that** a layer of material (30) for piezoresistive gauge is formed on the electric isolation layer (32), **in that** a protection mask (34, 40, 46) is formed on the layer of material for piezoresistive gauge, **in that**, within the areas that are not protected by the mask, an etching of the material or a transformation of the latter into an electric isolation material is performed such that after selectively removing the mask, side tangents (T) of the thus formed piezoresistive gauge, when observing a cross-section of the device, essentially form over 90° angles (*α*) with the surface of the electric isolation layer upon which the piezoresistive gauge is formed.

2. Process according to claim 1, wherein the material for piezoresistive gauge is chosen amongst monocrystalline silicon, polycrystalline silicon and silicon carbide.

3. Process according to any of claims 1 and 2, wherein:
- a layer of a material (30) for piezoresistive gauge is formed on the electric isolation layer (32),
- an etching mask (34) is formed on this layer of material, where this mask is intended to prevent etching of the material it coats,
- a wet isotropic etching is done on the areas of the material that are not protected by the mask, and
- this mask is selectively removed.

4. Process according to any of claims 1 and 2, wherein
- a layer of material (30) for piezoresistive gauge is formed on the electric isolation material (32),
- an etching mask (34) is formed on this layer of material, where this mask is intended to prevent the etching of the material that it coats,
- a plasma isotropic etching is performed on the areas of material that are not protected by the mask, and
- this mask is selectively removed.

5. Process according to any of claims 1 and 2, wherein
- a layer of material (30) for piezoresistive gauge is formed on the electric isolation layer (32),
- an etching mask (40) is formed on this layer of material, where this mask is intended to prevent the etching of the material that it coats, and
- a chemical anisotropic etching is performed on the areas of material that are not protected by the mask and,
- this mask is selectively removed.

6. Process according to any of claims 1 and 2, wherein
- a layer of material (30) for piezoresistive gauge is formed on the electric isolation layer (32),
- a mask (46) is formed on this layer of material, where this mask is intended to prevent the transformation of material it coats into a second electric isolation material,
- the material for piezoresistive gauge is transformed within the areas (47, 48) of the latter material that are not protected by the mask into this second electric isolation material, and
- this mask is selectively removed.

7. Process according to claim 6, wherein the second electric isolation material is the same as that of the electric isolation material (32).

8. Process according to any of claims 3 to 7, wherein the mask (34, 40, 46) is made of silicon nitride.

9. Process according to any of claims 3 to 8, wherein an electric isolation layer of passivation (68) is formed on the piezoresistive gauge (62).

10. Process according to claim 9, wherein the electric isolation layer of passivation (68) is achieved by transformation of the material of the piezoresistive gauge.

11. Process according to any of claims 9 and 10, wherein
- a contact opening (70) through the layer of passivation (68) is formed on the piezoresistive gauge (62),
- an electric conduction layer (72) is formed on the layer of passivation (68) and within the contact opening (70), and
- this electric conduction layer is etched to define the latter.

12. Process according to claim 11, wherein
- a further electric isolation layer (74) is formed on the electric conduction layer (72) to protect the latter, and
- an opening (76) through this electric isolation layer is formed with the aim of forming a contact with the electric conduction layer.
